(19) Europäisches Patentamt
European Patent Office
Office européen des brevets

(11) Veröffentlichungsnummer: **0 003 534**
**B1**

(12) # EUROPÄISCHE PATENTSCHRIFT

(45) Veröffentlichungstag der Patentschrift: **18.03.81**

(51) Int. Cl.³: **C 08 G 8/28,** C 08 L 21/00

(21) Anmeldenummer: **79100221.5**

(22) Anmeldetag: **26.01.79**

(54) **Verfahren zur Herstellung von borhaltigen Phenol-Formaldehydharzen.**

(30) Priorität: **08.02.78 DE 2805180**

(43) Veröffentlichungstag der Anmeldung: **22.08.79 Patentblatt 79/17**

(45) Bekanntmachung des Hinweises auf die Patenterteilung: **18.03.81 Patentblatt 81/11**

(84) Benannte Vertragsstaaten: **BE DE FR GB IT LU NL**

(56) Entgegenhaltungen:
**DE-A-1 570 396**
**DE-A-2 557 613**
**DE-C-474 561**
**DE-C-537 367**

(73) Patentinhaber: **BAYER AG, Zentralbereich Patente, Marken und Lizenzen, D-5090 Leverkusen 1, Bayerwerk (DE)**

(72) Erfinder: **Schmidt, Manfred, Dr., Bodelschwinghstrasse 20, D-4150 Krefeld (DE)**
Erfinder: **Freitag, Dieter, Dr., Hasenheide 10, D-4150 Krefeld (DE)**
Erfinder: **Fries, Hermann, Dr., Am Katterbach 60, D-5060 Bergisch-Gladbach 2 (DE)**
Erfinder: **Esch, Erich, Clemens-Winklerstrasse 7, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).



BUNDESDRUCKEREI BERLIN

# Verfahren zur Herstellung von borhaltigen Phenol-Formaldehydharzen

Die deutsche Offenlegungsschrift 2 557 613 beschreibt borhaltige Phenol-Formaldehydharze, die durch partielle Umesterung eines Novolakes mit Borsäure, Bortrioxid oder Borsäurealkylester sowie nachfolgende Umsetzung mit ungesättigten Fettsäuren hergestellt werden können. Eine ebenfalls erwähnte Verfahrensweise beschreibt die gleichzeitige Umsetzung des Novolakes mit der Borkomponente und der ungesättigten Fettsäure. Die für die Umesterung mit der ungesättigten Fettsäure und der Borverbindung eingesetzten Novolake werden durch sauer katalysierte Umsetzung von Aldehyden, mit Diphenylolalkanen oder Diphenylolalkangemischen oder Gemischen von Diphenylolalkanen mit Hydroxyphenyl-hydroxyindanen hergestellt und besitzen durchschnittlich Molgewichte von $\overline{M}_{OS} = 400$ bis 1600.

Die so hergestellten Harze haben Jodzahlen von 80 bis 200, OH-Zahlen von 200 bis 500, einen Borgehalt bis zu 7 Gew.-% und besitzen einen Erweichungspunkt von 50 bis 150° C.

Diese Harze können in Gegenwart von Formaldehyd-abspaltenden Verbindungen, wie beispielsweise Hexamethylentetramin, Paraformaldehyd, Trioxi- oder Tetraoxymethylen gehärtet werden und finden Anwendung beispielsweise als Verstärkerharze für Kautschuk.

Nach dem beschriebenen Verfahren wird bei der Herstellung des mit der Borsäurekomponente zu veresternden Novolaks das durch die Reaktion freiwerdende Wasser ebenso wie das durch das gegebenenfalls verwendete Formalin in das Reaktionsgemisch eingeschleppte Wasser durch ein als Lösungsvermittler wirkendes Solvens wie Toluol oder Isobutanol azeotrop abdestilliert. Nachteilig hierbei ist die für die azeotrope Entwässerung benötigte lange Destillationszeit. Da im Verlauf der azeotropen Entwässerung die Viskosität des Reaktionsgemisches ansteigt, erfolgt eine weniger intensive Durchmischung und daraus resultierend entsteht ein schlechter werdender Wärmeübergang, so daß eine drastische Verlangsamung der Destillationsgeschwindigkeit im Verlauf der azeotropen Entwässerung festgestellt wird. Ein wesentlicher Teil der gesamten Reaktionsdauer wird außerdem durch die notwendige Umesterung der viskosen Novolaklösung mit den obengenannten Borverbindungen unter nochmaliger azeotroper Entwässerung beansprucht. Hierbei steigt die Viskosität des Reaktionsgemisches nochmals an.

Die als entgegenwirkende Maßnahme denkbare Erhöhung der Solvensmenge kann nicht zur Verminderung der Reaktionsdauer beitragen, da eine größere Lösungsmittelmenge sowohl erniedrigend bezüglich der Umesterungsgeschwindigkeit sich erfahrungsgemäß auswirkt, und ein zusätzlicher Solvensüberschuß vor Aufarbeitung der Harzlösung wieder destillativ aus dem Reaktionsgemisch entfernt werden müßte.

Es wurde nun gefunden, daß dieser Nachteil behoben werden kann, wenn bereits vor Beginn der azeotropen Entwässerung des Novolakes die geeigneten ungesättigten Fettsäuren oder Fettsäureester dem Reaktionsgemisch zugesetzt werden und anschließend mit Borverbindungen weiter umgesetzt wird.

Durch diese Umkehrung der Verfahrensweise wird durch den von Anfang an wirksamen viskositätserniedrigenden Einfluß der Fettsäure oder des Fettsäureesters eine wesentlich raschere Entwässerung des Reaktionsgemisches erreicht, ohne daß die optimalen Mengenverhältnisse der Reaktionskomponenten zueinander verändert werden müssen, und ohne daß die Konstitution des Harzes und seine wertvollen Eigenschaften eine Änderung erfahren. Die für die Entwässerung des Novolakharzes benötigte Zeit kann auf diese Weise erheblich vermindert werden. Gleichzeitig erniedrigt sich die Reaktionszeit für die Umsetzung der Borkomponente mit dem Reaktionsgemisch unter azeotroper Entwässerung wesentlich.

Gegenstand der Erfindung ist somit ein Verfahren zur Herstellung von borhaltigen Phenol-Formaldehydharzen durch Umsetzung von Diphenylolalkan-Novolaken mit ungesättigten Fettsäuren oder Fettsäureestern und Borverbindungen, das dadurch gekennzeichnet ist, daß man Diphenylolalkan-Novolake mit einem durchschnittlichen Molgewicht (osmometrisch bestimmt) von $\overline{M}_{OS} = 400$ bis 1600, vorzugsweise 600 bis 1200, mit 15 bis 35 Gew.-Tln einer ungesättigten Fettsäure oder deren Ester unter azeotroper Entwässerung reagieren läßt und anschließend mit 20 bis 100 Gew.-Tln eines Borsäuretri-, di- oder monoalkylesters mit 1 bis 4 C-Atomen pro Alkylkette oder mit 14 bis 72 Gew.-Tln eines Borsäurealkylesteranhydrids der Struktur $(RO)_2B-O-B(OR)_2$ mit 1 bis 4 C-Atomen pro Alkylkette R, oder mit 10 bis 50 Gew.-Tln, vorzugsweise 15 bis 20 Gew.-Tln, Bortrioxid oder mit 18 bis 90 Gew.-Tln, vorzugsweise 25 bis 36 Gew.-Tln, Borsäure in Gegenwart von 10 bis 120 Gew.-Teilen eines $C_1-C_4$-Alkohols umsetzt, wobei die Gewichtsmengen sich auf 100 Gew.-Teile des zur Herstellung des Diphenylolalkan-Novolakes verwendeten Diphenylolalkan oder Diphenylolalkangemisches beziehen.

Die nach diesem Verfahren herstellbaren borhaltigen Harze sind in Methanol, Äthanol, Propanol, Isopropanol, Butanol, Isobutanol, Dioxan, Tetrahydrofuran, Aceton, Methyläthylketon, Essigester, Butylacetat, Methyl- und Äthylglykolacetat löslich und weisen eine Jodzahl von 80 bis 200, vorzugsweise von 110 bis 170 und eine OH-Zahl von 200 bis 500, vorzugsweise von 240 bis 450, auf und besitzen einen Borgehalt bis zu 7 Gew.-%, vorzugsweise 1,5 bis 5 Gew.-%. Der Erweichungspunktbereich der Harze liegt zwischen 50 und 150° C, vorzugsweise zwischen 55

und 110° C.

Der Diphenylolalkan-Novolak kann durch folgende Formel (I) wiedergegeben werden:

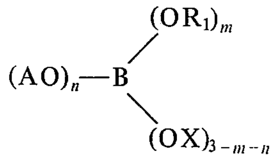

(I)

In dieser Formel bedeuten

m, n Werte zwischen 0 und 2 mit der Bedingung $m+n \leq 2$,
A $C_1-C_4$-Alkyl wie Methyl, Äthyl, Propyl, Butyl,
$R_1$ A oder X,
X einen Novolak, der durch Kondensation eines Aldehyds mit einem Diphenylolalkan oder Gemisch aus Diphenylolalkanen und (Hydroxyphenyl)-hydroxyindanen in Gegenwart saurer Katalysatoren gebildet wird und der noch freie phenolische OH-Gruppen enthält.

Zur Darstellung der benötigten Novolake werden Diphenylolalkane oder Gemische von Diphenylolalkanen der Formel (II) verwendet, wie sie beispielsweise in der DE-AS 1 235 894 beschrieben sind:

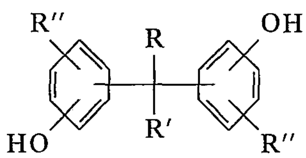

(II)

R $C_1-C_8$-Alkyl, $C_1-C_{12}$-Cycloalkyl,
R' H oder R oder
R und R' $C_4-C_7$-Alkylen, wobei R und R' mit dem sie verbindenden C-Atom einen carbocyclischen Ring bilden,
R'' H oder $C_1-C_4$-Alkyl.

Geeignet zur Herstellung der Novolake sind ebenfalls Gemische von Diphenylolalkanen der allgemeinen Formel (II) mit Hydroxyphenylhydroxyindanen der allgemeinen Formel (III), wie sie als Rückstandsharze (genannt »Primärharz«) bei der Bisphenol-A-Synthese anfallen.

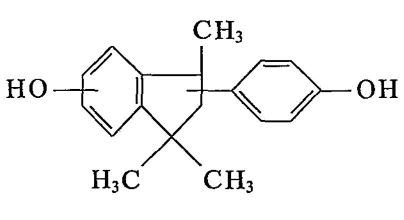

(III)

Vorzugsweise wird Bisphenol A oder ein Gemisch von Bisphenol A-Isomeren mit Hydroxyphenyl-hydroxyindanen der allgemeinen Formel (III) verwendet, wobei das Gew.-Verhältnis der Bisphenol A-Isomeren zu den Hydroxyphenylhydroxyindanen der allgemeinen Formel (III) 4 : 1 bis 9 : 1, vorzugsweise jedoch 6 : 1 bis 8 : 1, beträgt.

Das Diphenylolalkan oder Diphenylolalkangemisch wird in Anwesenheit von 10 bis 150 Gew.-Teilen, vorzugsweise von 15 bis 80 Gew.-Teilen, eines organischen Lösungsmittels (bezogen auf 100 Gew.-Teile Diphenylolalkan) wie beispielsweise Benzol, Toluol, Xylol, Essigester, Butylacetat, Methylglykol- oder Äthylglykolacetat oder Alkoholen mit 1 bis 4 C-Atomen mit 100 bis 140 Mol-%, vorzugsweise mit 120 bis 130 Mol-%, eines Aldehyds in Gegenwart von 0,01 bis 1 Mol-%, vorzugsweise 0,5 Mol-% (bezogen auf 100 Mol-% phenolisches OH) eines sauren organischen oder anorganischen Katalysators oder Gemischen aus beiden in der Siedehitze in bekannter Weise umgesetzt. Die Reaktionsdauer beträgt etwa 20 Minuten bis 2 Stunden vorzugsweise 1/2 bis 1 Stunde. Bevorzugt wird Toluol, Butanol oder Isobutanol verwendet.

Als Aldehyde können Chloral, Furfurol, Propionaldehyd, Butyraldehyd, Acetaldehyd und Formaldehyd Verwendung finden. Vorzugsweise werden wäßrige Formalinlösung, Trioxan oder Paraformaldehyd verwendet.

Als saure Katalysatoren werden feste und flüssige organische Säuren wie Oxalsäure, Bernsteinsäure, Ameisensäure, Essigsäure, Milchsäure und p-Toluolsulfonsäure eingesetzt; weiterhin sind anorganische Säuren wie Salzsäure, Bromwasserstoffsäure, Phosphorsäure und Kombinationen aus den oben beschriebenen organischen und anorganischen Säuren verwendbar. Vorzugsweise werden p-Toluolsulfonsäure, Oxalsäure und Phosphorsäure eingesetzt.

Dem hergestellten Novolak werden 15 bis 35 Gew.-Teile, vorzugsweise 20 bis 27 Gew.-Teile (bezogen auf 100 Gew.-Teile Diphenylolalkan oder Diphenylolalkangemisch) der ungesättigten Fettsäure oder deren Ester hinzugefügt und das Reaktionsgemisch azeotrop entwässert. Die hierbei einzustellende Heizbadtemperatur kann 100 bis 200°C, vorzugsweise 130 bis 170°C, betragen, wobei bei Normaldruck als auch im Vakuum destilliert werden kann.

Als ungesättigte Fettsäuren oder deren Ester können folgende Verbindungen beispielsweise eingesetzt werden:

Leinölfettsäure, Sojaölfettsäure, Tallölfettsäure, Erdnußölfettsäure, technische konjugiert ungesättigte Fettsäure, wie Conjuenfettsäure (Handelsname der Fa. Henkel, Düsseldorf), Ricinolsäure, Ricinenfettsäure oder deren Gemische sowie deren Glyzeride oder Glyzeridgemische oder deren Methylester oder Methylestergemische.

Vorzugsweise werden Leinölfettsäure, Sojaölfettsäure, Conjuenfettsäure und Ricinusöl verwendet.

Vorzugsweise weisen die ungesättigten Fettsäuren oder deren Ester Jodzahlen von über 40 auf.

Die anschließende Umsetzung der modifizierten Diphenylolalkan-Novolake mit den Borverbindungen kann folgendermaßen geschehen: In die Diphenylolalkan-Novolak-Lösung werden 10

bis 120 Gew.-Teile, vorzugsweise 15 bis 100 Gew.-Teile (bezogen auf 100 Gew.-Teile Diphenylolalkan oder Diphenylolalkangemisch), eines Alkohols ROH eingetragen, wobei R eine geradkettige oder verzweigte Alkylgruppe mit 1 bis 4 C-Atomen wie Methyl, Äthyl, Propyl, Isopropyl, Butyl, Isobutyl, t-Butyl, vorzugsweise jedoch Äthyl oder Isobutyl, bedeuten.

Zu der alkoholischen Lösung des Novolaks werden 10 bis 50 Gew.-Teile Bortrioxid, vorzugsweise 15 bis 20 Gew.-Teile Bortrioxid oder 18 bis 90 Gew.-Teile Borsäure, vorzugsweise 25 bis 36 Gew.-Teile Borsäure, gegeben und bei Rückflußtemperatur innerhalb von 1/2 bis 3 Stunden zu einem Gemisch aliphatisch-aromatischen Borsäureester umgesetzt, wobei Wasser aus dem Reaktionsgemisch azeotrop abdestilliert wird.

Die Umsetzung des Novolak-Fettsäureharzes mit der Borverbindung erfolgt bevorzugt bei Temperaturen von 100 bis 200°C, insbesondere 130 bis 170°C.

Selbstverständlich können statt des Bortrioxids oder der Borsäure auch separat synthetisierte Borsäurealkylester eingesetzt werden.

Borsäurealkylester sind Verbindungen der Formel $B(OR)_3$, in der R einen Alkylrest mit 1 bis 4 C-Atomen, wie Methyl, Äthyl, Propyl, Isopropyl, Butyl oder Isobutyl darstellt.

Bei Verwendung von separat synthetisierten Borsäureestern $B(OR)_3$ kann die vorausgehende Zugabe eines Alkohols ROH mit einer geradkettigen oder verzweigten Alkylgruppe mit 1 bis 4 C-Atomen unterbleiben. Auch die Verwendung von Borsäurehalbestern des Typs $(RO)_2B-OH$ oder $(RO)-B(OH)_2$ ist möglich. Eine bevorzugte Form der Dosierung der Borverbindung ist die Zugabe von 14 bis 72 Gew.-Tln eines separat synthetisierten Borsäurealkylesteranhydrids des Typs $(RO)_2B-O-B(OR)_2$ mit 1 bis 4 C-Atomen pro Alkylkette R. R stellt besonders bevorzugt einen Butylrest dar.

Nach diesem Verfahren zur Herstellung der borhaltigen Harze wird im Vergleich zu dem in der DE-OS 2 557 613 beschriebenen Verfahren 40 bis 50% weniger an Reaktionszeit benötigt. Die Isolierung des borhaltigen Verstärkerharzes kann nach verschiedenen technischen Verfahrensvarianten erfolgen, wie beispielsweise Eindampfung der Harzlösung im Reaktionskessel bei Normaldruck sowie im Vakuum, wobei mit ansteigenden Heizbadtemperaturen gearbeitet werden kann. Das Harz wird nach diesem Verfahren im flüssigen Zustand aus dem Reaktionsgefäß abgelassen und nach dem Erstarren gemahlen.

Eine bevorzugte Variante der Harzisolierung ist die Eindampfung der Harzlösung über einen Schlangenrohrverdampfer, wobei sowohl mit Inertgas wie beispielsweise Stickstoff als Treibmittel als auch ohne Inertgas unter Vakuum gearbeitet werden kann. Die einzustellende Verdampfertemperatur richtet sich nach dem gegebenenfalls angelegten Vakuum und kann 120 bis 220°C betragen. Das durch Zahnradpumpen ausgetragene flüssige Harz kann nach dem Fachmann geläufigen Methoden z. B. mit einer Kühlwalze oder auf einem Kühlband zu verarbeitungsfertigem Granulat konfektioniert werden. Die Konfektionierung des aus dem Verdampfer ausgetragenen flüssigen Harzes durch direkte Kopfgranulierung unter Zuhilfenahme von Kühlwasser oder Kühlluft ist ebenfalls eine mögliche Aufarbeitungsmethode.

Das nach dem erfindungsgemäßen Verfahren hergestellte Harz kann auch aus einer Lösung ohne weiteres über eine Ausdampfschnecke isoliert werden.

Die hergestellten Harze werden, falls sie als Verstärkerharze für natürliche und/oder synthetische Kautschuke eingesetzt werden, in Gegenwart einer formaldehydabspaltenden Verbindung, wie beispielsweise Hexamethylentetramin, Paraformaldehyd, Trioxi- oder Tetraoximethylen auf den Kautschukverarbeitung üblichen Mischaggregaten, wie z. B. Walzwerken, Knetern und Schnellmischern, eingearbeitet. Die Einarbeitung erfolgt bei Temperaturen von 70 bis 120°C, vorzugsweise von 80 bis 100°C.

Als natürliche und/oder synthetische Kautschuke seien beispielsweise aufgeführt:

Naturkautschuk, Styrol-Butadien-Kautschuk, Chloroprenkautschuk, Nitrilkautschuk, Isoprenkautschuk, Butadienkautschuk, EPDM, Butylkautschuk, Transpolypentenamerkautschuk.

Den Kautschuken können die üblichen Füllstoffe wie aktive Kieselsäuren, Ruß, Kaolin, Kreide sowie Alterungsschutzmittel, Vernetzungschemikalien, Vulkanisationsbeschleuniger und die weiterhin üblichen Hilfsmittel zugesetzt werden.

Die erfindungsgemäßen Harze wurden den Kautschuken in solchen Mengen zugesetzt, so daß diese eine Verstärkerharzwirkung ergeben, vorzugsweise sind dies 5 bis 100 Gew.-Teile, besonders bevorzugt 10 bis 60 Gew.-Teile des erfindungsgemäßen Harzes, bezogen auf 100 Gew.-Teile Kautschuk.

Die so hergestellten Kautschukmischungen können durch die üblichen Verformungsverfahren wie z. B. Pressen, Extrudieren, Kalandrieren zu Formkörpern wie z. B. Sohlen, Walzen, Bodenbelägen und Dichtungsringen verarbeitet werden. Die Vulkanisation erfolgt nach den üblichen Verfahren, z. B. in der Presse, in Dampf, im Heißluftkanal oder im Salzbad bei Temperaturen von etwa 130 bis 210°C.

Die nachfolgenden Beispiele dienen der Erläuterung der Erfindung.

Vergleichsversuch (entsprechend Beispiel 3 der DE-OS 2 557 613)

In die Reaktion eingesetzt wird das bei der Bisphenol-A-Herstellung anfallende »Primärharz«, ein Gemisch von Bisphenol-A-Isomeren

mit Hydroxylphenyl-hydroxyindan und Hydroxyphenyl-hydroxychroman-Isomeren im Gewichtsverhältnis von ca. 7 : 1 : 1.

1,24 kg Primärharz werden in 700 ml Toluol suspendiert, 25 g Oxalsäure zugegeben und unter Stickstoffatmosphäre bei Rückflußtemperatur mit 550 g 35%iger Formalinlösung unter intensivem Rühren versetzt. Man läßt 1/2 Stunde in der Siedehitze nachreagieren, gibt 2 g Phosphorsäure (85%ig) zu und läßt nochmals 15 min nachreagieren. Anschließend werden 440 ml Wasser azeotrop abdestilliert (Dauer: 3 Std.). Man trägt 1 kg Äthanol ein und erhält eine homogene Lösung, zu der 200 g Bortrioxid gegeben werden. Nach 2stündiger Reaktion unter Rückflußsieden werden bei Normaldruck ca. 80% der gesamten Lösungsmittelmenge abdestilliert. (Destillationsdauer: 3 1/2 Std.). Hierbei werden nochmals 80 ml Wasser abgetrennt. Zu dem Reaktionsprodukt werden 300 g Conjuvandolfettsäure hinzugefügt. Man läßt bei einer Badtemperatur von 150° C 15 min nachreagieren. Das restliche Lösungsmittel sowie Restwassermengen werden anschließend im Vakuum abdestilliert (Dauer: 1/2—1 Std.). Das zurückbleibende viskose Harz wird aus dem Reaktionsgefäß entfernt und nach dem Erstarren gemahlen. Man erhält 1,7 kg Harz.

| | |
|---|---|
| Erweichungspunkt: | 76° C |
| Jodzahl: | 143 |
| OH-Zahl: | 450 |
| Bor: | 2,7% |
| Gesamtreaktionsdauer: | 10 Stunden |

Beispiel

1,24 kg Primärharz werden in 700 ml Toluol suspendiert, 25 g Oxalsäure zugegeben und unter Stickstoffatmosphäre bei Rückflußtemperatur mit 550 g 35%iger Formalinlösung unter intensivem Rühren zur Reaktion gebracht. Man läßt 1/2 Std. unter Rückflußsieden nachreagieren, gibt 2 g Phosphorsäure (85%ig) zu sowie 300 g Conjuvandolfettsäure und destilliert sofort im Anschluß daran 440 ml Wasser ab (Dauer: 2 Std.). In die niedrigviskose Lösung werden 1 l Äthanol und 200 g Bortrioxid eingetragen und 1 Std. in der Siedehitze zur Reaktion gebracht. Anschließend wird bei Normaldruck die Hauptmenge des Lösungsmittelgemisches Toluol/Äthanol abdestilliert (Dauer: 100 min). Hierbei werden nochmals 80 ml Wasser erhalten. Im Vakuum werden anschließend bei bis auf 150° C ansteigender Badtemperatur das restliche Lösungsmittel entfernt und das Harz anschließend aus dem Reaktionsgefäß gedrückt. Man erhält 1,7 kg Harz, das nach dem Erstarren gemahlen wird.

| | |
|---|---|
| Erweichungspunkt: | 75—77° C |
| Gesamtreaktionsdauer: | 5 3/4 Std. |
| Zeitersparnis gegenüber Bsp. 1: | 4 1/4 Std. |
| Jodzahl des Harzes: | 143 |
| OH-Zahl: | 446—452 |
| Bor: | 2,7% |

Das gemäß dem Vergleichsversuch erhaltene Härterharz wird ebenso wie das nach dem Beispiel erhaltene Härterharz in einer üblichen Kautschukmischung auf Basis SBR (Styrol-Butadien-Kautschuk) eingearbeitet und der Härtungseffekt bzw. die positive Veränderung der mechanischen Eigenschaften der aus diesen Kautschukmischungen hergestellten Vulkanisate im Vergleich zu den Effekten, die durch übliche Styrol-Butadien-Harze (mit ca. 85% Styrolanteil) in SBR erzielt werden, verglichen.

Nach folgender Basisrezeptur werden Mischungen hergestellt auf Basis SBR (A, B, C, D), aus denen Vulkanisate mit den anschließend vermerkten physikalischen Werten gefertigt werden. Die Werte der Rohmischungen sind mitaufgeführt, um das Verarbeitungsverhalten unter Einfluß der Harze zu demonstrieren.

| | Mischungen A Gew.-Tle. | B Gew.-Tle. | C Gew.-Tle. | D Gew.-Tle. |
|---|---|---|---|---|
| SBR (Buna Hüls 1507) | 100,0 | 100,0 | 100,0 | 100,0 |
| Stearinsäure | 2,0 | 2,0 | 2,0 | 2,0 |
| Zinkoxid aktiv | 3,0 | 3,0 | 3,0 | 3,0 |
| Kieselsäure | 30,0 | 30,0 | 30,0 | 30,0 |
| Diäthylglykol | 2,5 | 2,5 | 2,5 | 2,5 |
| Alterungsschutzmittel | 1,5 | 1,5 | 1,5 | 1,5 |
| Schwefel | 2,2 | 2,2 | 2,2 | 2,2 |
| Dibenzothiazoyldisulfid | 2,2 | 2,2 | 2,2 | 2,2 |
| Tetramethylthiuramdisulfid | 0,75 | 0,75 | 0,75 | 0,75 |
| Styrolharz (Duranit B) | — | 30,0 | — | — |
| Hexamethylentetramin | — | — | 3,6 | 3,6 |
| Härterharz (gem. Vergleichsversuch) | — | — | 30,0 | — |
| Härterharz (gem. Beispiel) | — | — | — | 30,0 |

Physikalische Werte der Rohmischungen

| | A | B | C | D |
|---|---|---|---|---|
| Viskosität (Defohärte/-elastizität) nach DIN 53 514 | 400/20 | 500/23 | 725/17 | 722/17 |

Physikalische Werte der Vulkanisate nach Vulkanisation von 4 mm Prüfkörpern (Vulkanisation 30′ bei 150° C)

| | nach DIN | Mischungen A | B | C | D |
|---|---|---|---|---|---|
| Zugfestigkeit (MPa) | 53 504 | 4,7 | 7,2 | 6,1 | 6,1 |
| Bruchdehnung (%) | 53 504 | 350 | 350 | 325 | 326 |
| Modulus 100% (MPa) | 53 504 | 1,6 | 1,9 | 3,9 | 3,9 |
| Härte (Shore A bei 20°/75° C) | 53 505 | 63/62 | 68/58 | 87/80 | 87/81 |
| Stoßelastizität (% bei 20°/75°) | 53 512 | 51/61 | 46/52 | 48/51 | 48/50 |
| Strukturfestigkeit | nach Pohle | 60 | 80 | 100 | 100 |

## Patentansprüche

1. Verfahren zur Herstellung von borhaltigen Phenol-Formaldehydharzen durch Umsetzung von Diphenylolalkan-Novolaken mit ungesättigten Fettsäuren oder Fettsäureestern und Borverbindungen, dadurch gekennzeichnet, daß man Diphenylolalkan-Novolake mit einem Molgewicht 400 bis 1600 mit 15 bis 35 Gew.-Teilen einer ungesättigten Fettsäure oder deren Ester unter azeotroper Entwässerung reagieren läßt und anschließend mit 20 bis 100 Gew.-Teilen eines Borsäuretri-, di- oder monoalkylesters mit 1 bis 4 C-Atomen pro Alkylkette oder mit 14 bis 72 Gew.-Teilen eines Borsäurealkylesteranhydrids der Struktur $(RO)_2B-O-B(OR)_2$ mit 1 bis 4 C-Atomen pro Alkylkette R, oder mit 10 bis 50 Gew.-Teilen Bortrioxid oder mit 18 bis 90 Gew.-Teilen Borsäure in Gegenwart von 10 bis 120 Gew.-Teilen eines $C_1-C_4$-Alkohols umsetzt, wobei die Gewichtsmengen sich auf 100 Gew.-Teile des zur Herstellung des Diphenylolalkan-Novolakes verwendeten Diphenylolalkan oder Diphenylolalkangemisches beziehen.

2. Verfahren nach Anspruch 2, dadurch gekennzeichnet, daß man eine Umsetzung unter Rückfluß innerhalb von 1/2—3 Std. durchführt.

3. Verfahren nach Anspruch 1, dadurch gekennzeichnet, daß die Umsetzung des Novolak-Fettsäure-Harzes mit der Borverbindung bei Temperaturen von 100—200° C erfolgt.

4. Verfahren nach Anspruch 4, dadurch gekennzeichnet, daß die Umsetzung bei Temperaturen von 130—170° C erfolgt.

5. Verfahren nach Anspruch 1, dadurch gekennzeichnet, daß die Reaktionslösung der Mischung von Diphenylolalkan-Novolaken mit unges. Fettsäuren oder deren Ester zur Umsetzung mit den Borverbindungen eingesetzt wird.

6. Verfahren nach Anspruch 1, dadurch gekennzeichnet, daß als Diphenylolalkan-Novolak Umsetzungsprodukte von Aldehyden mit einem Diphenylolalkan der allgemeinen Formel II

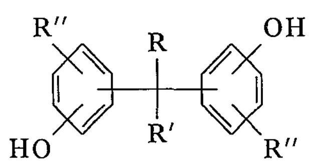
(II)

R = $C_1-C_8$-Alkyl, $C_1-C_{12}$-Cycloalkyl
R′ = H oder R oder
R und R′ = $C_4-C_7$-Alkylen, wobei R und R′ mit dem sie verbindenden C-Atom einen carbocyclischen Ring bilden,
R″ = H oder $C_1-C_4$-Alkyl,

oder Gemischen von Diphenylolalkanen der allgemeinen Formel II mit Hydroxyphenyl-hydroxyindanen der allgemeinen Formel III

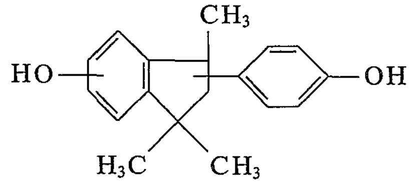
(III)

eingesetzt werden.

## Claims

1. A process for the preparation of boron-containing phenol/formaldehyde resins by reacting diphenylol alkane novolaks with unsaturated fatty acids or fatty acid esters and boron compounds, characterised in that diphenylol alkane novolaks having a molecular weight of from 400 to 1600 are reacted with from 15 to 35 parts, by weight, of an unsaturated fatty acid or its ester, accompanied by the azeotropic removal of water, and then with from 20 to 100 parts by weight of a boric acid trialkyl, dialkyl or monoalkyl ester containing from 1 to 4 carbon atoms per alkyl chain or with 14 to 72 parts by weight of a boric acid alkyl ester anhydride of the structure $(RO)_2B-O-B(OR)_2$ with 1 to 4 carbon atoms per alkyl chain R or with from 10 to 50 parts by weight of boron trioxide or with from 18 to 90 parts by weight of boric acid in the presence of 10 to 120 parts by weight of a $C_1-C_4$ alcohol, the quantities by weight being based on 100 parts by weight of the diphenylol alkane or diphenylol alkane mixture used for the production of the diphenylol alkane novolak.

2. A process according to Claim 2, characterised in that a reaction is carried out under reflux over a period of from 30 minutes to 3 hours.

3. A process according to Claim 1, characterised in that the reaction of the novolak fatty acid resin with the boron compound is carried out at temperatures of from 100 to 200° C.

4. A process according to Claim 4, characterised in that the reaction is carried out at temperatures of from 130 to 170° C.

5. A process according to Claim 1, characterised in that the reaction solution of the mixture of diphenylol alkane novolaks with unsaturated fatty acids or the esters thereof is used for the reaction with the boron compounds.

6. A process according to Claim 1, characterised in that reaction products of aldehydes with a diphenylol alkane of the general formula II

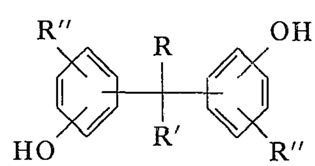
(II)

R = $C_1-C_8$-alkyl, $C_1-C_{12}$-cycloalkyl
R′ = H or R or

R and R' = $C_4-C_7$-alkylene, R and R' completing a carbocyclic ring with the carbon atom to which they are attached,
R'' = H or $C_1-C_4$-alkyl,

or mixtures of diphenylol alkanes of the general formula II with hydroxyphenyl hydroxy indanes of the general formula III

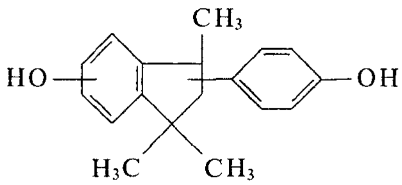

(III)

are used as the diphenylol alkane novolak.

## Revendications

1. Procédé de fabrication de résines phénol-formaldéhyde contenant du bore par réaction de novolaques de diphénylolalcanes avec des acides gras ou esters d'acides gras insaturés et des composés de bore, caractérisé en ce qu'on fait réagir des novolaques de diphénylolalcanes ayant un poids moléculaire de 400 à 1600 avec 15 à 35 parties en poids d'un acide gras insaturé ou de ses esters sous déshydratation azéotropique, puis avec 20 à 100 parties en poids d'un ester tri-, di- ou mono-alcoylé d'acide borique ayant 1 à 4 atomes de carbone par chaîne alcoyle, ou avec 14 à 72 parties en poids d'un anhydride d'ester alcoylé d'acide borique de structure $(RO)_2B-O-B(OR)_2$ ayant 1 à 4 atomes de carbone par chaîne alcoyle R, ou avec 10 à 50 parties en poids de trioxyde de bore, ou avec 18 à 90 parties en poids d'acide borique, en présence de 10 à 120 parties en poids d'un alcool en $C_1-C_4$, les quantités en poids se rapportant à 100 parties en poids du diphénylolalcane ou mélange de diphénylolalcanes employé pour la préparation de la novolaque de diphénylolalcane.

2. Procédé selon la revendication 1, caractérisé en ce qu'on exécute une réaction à reflux en 1/2 à 3 heures.

3. Procédé selon la revendication 1, caractérisé en ce que la réaction de la résine de novolaque-acide gras avec le composé de bore se fait à des températures de 100 à 200° C.

4. Procédé selon la revendication 3, caractérisé en ce que la réaction se fait à des températures de 130 à 170° C.

5. Procédé selon la revendication 1, caractérisé en ce qu'on utilise la solution de réaction du mélange de novolaques de diphénylolalcanes avec des acides gras insaturés ou leurs esters pour la réaction avec les composés de bore.

6. Procédé selon la revendication 1, caractérisé en ce qu'on utilise comme novolaque de diphénylolalcanes les produits de réaction d'aldéhydes avec un diphénylolalcane de formule générale:

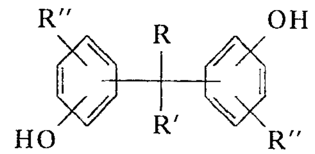

(II)

où

R = alcoyle en $C_1-C_8$, cycloalcoyle en $C_1-C_{12}$
R' = H ou R ou
R et R' = alcoylène en $C_4-C_7$, R et R' formant avec l'atome de carbone qui les unit un noyau carbocyclique,
R'' = H ou alcoyle en $C_1-C_4$,

ou des mélanges de diphénylolalcanes de formule générale II avec des hydroxyphényl-hydroxyindanes de formule générale III:

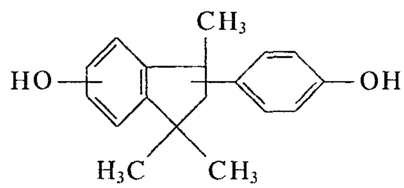

(III)